Europäisches Patentamt

European Patent Office

Office européen des brevets

(11) Publication number: **0 061 353**
**A1**

## (12) EUROPEAN PATENT APPLICATION

(21) Application number: **82301544.1**

(22) Date of filing: **24.03.82**

(51) Int. Cl.³: **B 64 D 17/80**

(30) Priority: **25.03.81 GB 8109331**

(43) Date of publication of application:
**29.09.82 Bulletin 82/39**

(84) Designated Contracting States:
**AT BE CH DE FR GB IT LI LU NL SE**

(71) Applicant. **Best, Peter**
**49 Grange Lane**
**Rossington near Doncaster South Yorkshire(GB)**

(72) Inventor: **Best, Peter**
**49 Grange Lane**
**Rossington near Doncaster South Yorkshire(GB)**

(74) Representative: **Wharton, Peter Robert et al,**
**Urquhart-Dykes & Lord 11th Floor Tower House Merrion Way**
**Leeds, LS2 8PB West Yorkshire(GB)**

(54) **Parachute unit.**

(57) A parachute unit comprises a rigid container 12 within which a main parachute 14 is located and, at one end of the container, a compartment 14 within which a drogue chute 28 is located. The drogue chute 28 is deployed by an ejection means which comprises one or more springs 36 electrically or mechanically actuated by the pilot. Once the drogue chute is deployed, lines 50 connect it to the main chute 14 cause the latter to be rapidly deployed also. The unit is especially useful in connection with small flying apparatus such as hang gliders and micro-light aircraft.

FIG.1

EP 0 061 353 A1

- 1 -

## PARACHUTE UNIT

This invention relates to a parachute unit particularly, but not exclusively, for use with hang gliders. Hang gliding can be extremely dangerous and in many countries the use of parachutes by hang glider pilots is compulsory. A hang glider pilot is strapped into a harness suspended from the main frame or keel of the hang glider and the parachute, when worn, is normally carried in a pouch/bag held beneath the pilot's body. To deploy the parachute it is necessary firstly for the glider to remove the parachute from the pouch or bag beneath his chest and then to throw the rolled parachute clear of the hang glider so that it may open. Since a hang glider pilot is connected to the glider not only by his harness but also by steering lines and struts it is often difficult to throw the parachute sufficiently well clear so that it does not foul in the hang glider rigging and therefore fail to open. Indeed most hang glider fatalities occur for this very reason.

The invention seeks to provide a parachute unit which may be used with hang gliders or other air-born or flying apparatus which is simple to deploy, even under adverse conditions, and may be located so that the parachute will open in an area free of obstructions.

According to the present invention there is provided a parachute unit which comprises a container within which a main chute is located and, at one end of the container a compartment within which a drogue chute is located, the drogue chute being separated from the main chute by an ejection means which can be actuated remotely from the unit whereby to deploy firstly the drogue chute followed by the main chute.

Preferably, the ejection means comprises a spring arrangement wherein one or more springs is held under tension or compression and may be released by mechanically or electrically operated trigger mechanism whereby to eject the drogue chute.

The main container may be fixed to the flying apparatus, for example to the rear extremity of the keel or the hang glider, and the main chute will be attached securely to the apparatus by means of a strap or webbing.

The container may be made from a material such as glass fibre reinforced plastics for strength coupled with lightness. The use of a parachute sealed within such a unit is especially advantageous since the container is weatherproof and, being rigid, protects the parachute from mechanical handling.

The ejection means may be triggered, and the parachute thereby deployed, by electrical or mechanical means, the latter being preferred. Suitable mechanical means include, for example, a Bowden cable arrangement which may be operated by a pilot simply by tugging on a ring.

CLAIMS:-

1.  A parachute unit which comprises a container within which a main chute is located and, at one end of the container, a compartment within which a drogue chute is located, the drogue chute being separated from the main chute by an ejection means which can be actuated remotely of the unit whereby to deploy firstly the drogue chute followed by the main chute.

2.  A unit according to claim 1 in which the ejection means comprises a spring arrangement wherein one or more springs is held under tension or compression and is released by a mechanically or electrically operated trigger mechanism whereby to eject the drogue chute.

3.  A unit according to either or claims 1 or 2 in which the main chute is located in a cylindrical container which is capable of being fixed to the flying apparatus.

4.  An apparatus according to any one of claims 1 to 3 in which the main chute in securely attached to the flying apparatus by means of a strap or webbing.

5.  A unit according to any one of claims 1 to 4 in which the container is made from a fibre-reinforced plastics material.

6.  A unit according to any one of claims 1 to 5 in which the ejection means is remotely actuated by means of a bowden cable arrangement operated by the pilot by pulling a ring.

7.  A hang glider incorporating a parachute unit according to any one of claims 1 to 7.

The invention will be described further, by way of example and with reference to the accompanying drawings, in which:-

Figure 1 is a diagrammatic side view, partly in section, of a parachute unit according to the invention; and

Figure 2 is a diagrammatic side view of the unit of Figure 1 in position on a hang glider.

Referring to the drawings, the unit generally designated 10 comprises a container 12 made of glass fibre reinforced plastics material. The container 12 carries within it a main chute 14 suitably folded whose lines 16, also folded, are attached to a strap 18 which in turn is fixed to the main harness 20 of a hang glider 22. The container 12 is affixed to the rear end of the keel 24 of the hang glider 22 by means of mounting brackets 26.

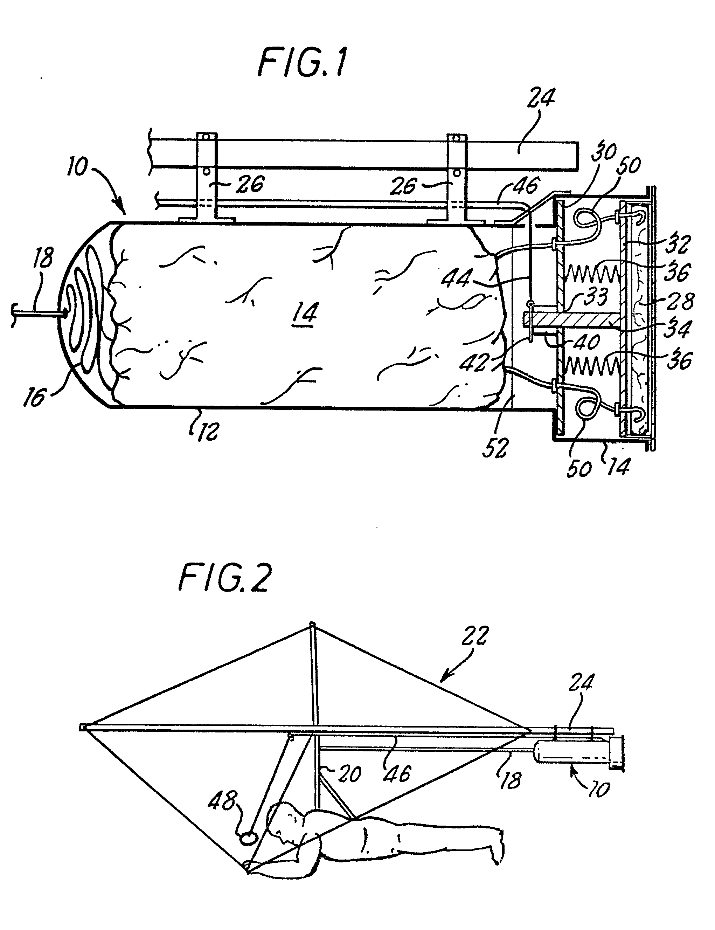

At the rear end of the container 12 a belled out portion 14 contains a drogue chute 28 and an ejection mechanism. The latter comprises an end plate 30 which locates as a snug fit in the belled out portion 14. A piston plate 32 having a central operating rod 34 also locates within the belled out portion 14 and three helical springs 36 are spaced radially outwardly from the central rod 34 circumferentially equi-distant around it. Alternatively, there can be a single helical spring circumscribing the rod 34. The rod 34 passes through a central aperture 38 in the back plate 30 and a roller portion 40 immediately behind the aperture 38. The end of the rod 34 carries a transverse bore capable of receiving a pin 42. As illustrated in Figure 1 the piston plate 32 is in its "cocked" or operative position with the central rod 34 extending through the aperture 38 and bush 40 against the compression of the springs 36 and held in this position by means of a pin 42 being inserted in the transverse bore. The pin 42 is attached to the inner core 44 of a Bowden cable 46 and the other end of which terminates in a grab handle 48 conveniently located adjacent one of the pilot's hands for immediate operation when needed.

In use in an emergency, the pilot grabs the handle 48 and pulls, thereby causing the cable inner 44 attached to the pin 42 to remove the latter from the transverse bore in the central rod 34. The rod 34 being released, the piston plate 32 is ejected rearwardly (that is to the right as viewed in Figure 1) under the action of the springs 36 thereby deploying the drogue chute 28 rearwardly of the hang glider 22 into the airstream. The drogue chute 28 opens extremely quickly and is connected to the main chute 14 by means of eight distance lines 50. Once open, the drogue chute, when the distance lines 50 are fully extended, pulls out the end plate 30 and pulls out the main chute through a tin foil wadding and foam protection pad 52, thus deploying the main chute 14 which takes the load of the hang glider and its pilot. Being placed at the rear of the hang glider 22 both the drogue chute 28 and the main chute 14 are deployed well behind the hang glider and are in no danger of entangling with its rigging. The lines 16 of the chute 14 are directly attached by means of the strap 18 to the pilot harness 20 thereby ensuring a direct line between the pilot himself and the main chute 14 although, of course, the hang glider will also be supported by the chute.

The use of the invention is not restricted to use with hang gliders but may be used in any location where a compact convenient and durable parachute unit which is simply operated is required. If desired, the mechanical actuation by means of a Bowden cable may be replaced by, for example, a solenoid operated actuation thereby allowing the triggering signal to be sent electrically by means of a wire or even by radio signal.

FIG.1

FIG.2

**0061353**

European Patent
Office

**EUROPEAN SEARCH REPORT**

Application number

EP 82 30 1544

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 033 528 (DIGGS) *Abstract; column 5, lines 25-30; column 5, lines 59-67; column 4, lines 21-33* | 1,2,3 | B 64 D 17/80 |
| X | US-A-2 762 589 (FRIEDER) *Column 2, lines 32-38* | 5 | |
| X | FR-A-1 569 939 (TATSUSABURO) *Page 1, lines 30-40* | 4 | |
| X | US-A-3 007 658 (FINKLEA) *Column 2, lines 56-60* | 6 | |
| X | US-A-4 247 060 (CORY) *Abstract* | 7 | |
| A | GB-A- 787 102 (SOCIETE NATIONALE DE CONSTRUCTION AERONAUTIQUE) *Page 2, lines 99-105* | 1 | TECHNICAL FIELDS SEARCHED (Int. Cl. 3) B 64 D 17/00 |
| A | DE-A-2 841 229 (SCHLENKER) *Claims* | 1,6,7 | |

The present search report has been drawn up for all claims

| Place of search THE HAGUE | Date of completion of the search 23-06-1982 | Examiner HAUGLUSTAINE H.P.M. |
|---|---|---|